# EUROPÄISCHE PATENTANMELDUNG

(11) **EP 3 866 128 A1**
(43) Veröffentlichungstag der Anmeldung: **18.08.2021**
(21) Anmeldenummer: 21154177.6
(22) Anmeldetag: 29.01.2021
(51) Int. Cl.: G07F 7/06, G07G 1/00, H04N 13/204

(54) **ERKENNUNGSSYSTEM UND VERFAHREN ZUR OBJEKTERKENNUNG FÜR EINEN ODER IN EINEM ANNAHMEAUTOMATEN**

(30) Priorität: 14.02.2020 DE 102020201846
(71) Anmelder: SIELAFF GMBH & CO. KG AUTOMATENBAU, 91567 Herrieden (DE)
(72) Erfinder: GUO, Yibo, 98693 Ilmenau (DE); LY, Minh Triet, 98693 Ilmenau (DE)
(74) Vertreter: Isarpatent

(57) **Zusammenfassung**

Die vorliegende Erfindung betrifft ein Erkennungssystem zur Objekterkennung für einen oder in einem Annahmeautomaten, insbesondere zur Erkennung von Leergutkästen und deren Belegung in einem Leergutrücknahmeautomaten, mit: einer Transporteinrichtung, welche eine vorbestimmte Transportrichtung aufweist; einer an der Transporteinrichtung angeordneten Erkennungseinrichtung, welche eine erste Kamera und eine zweite Kamera aufweist, wobei die zweite Kamera bezogen auf die Transportrichtung quer zu der ersten Kamera versetzt angeordnet ist, wobei die erste Kamera und die zweite Kamera jeweils zum Erfassen eines mit der Transporteinrichtung transportierten Objekts jeweils über einen direkten optischen Strahlengang angeordnet sind, und wobei die Erkennungseinrichtung mit einer Bildverarbeitungseinrichtung zur Ermittlung stereoskopischer Informationen des Objekts auf Basis der mittels der ersten Kamera und der zweiten Kamera erfassten Bildinformationen gekoppelt ist. Die Erfindung betrifft außerdem ein Verfahren zur Objekterkennung.

## Beschreibung

### GEBIET DER ERFINDUNG

Die vorliegende Erfindung betrifft ein Erkennungssystem zur Objekterkennung für einen oder in einem Annahmeautomaten, insbesondere zur Erkennung von Leergutkästen und deren Belegung mit Leergutbehältern in einem Leergutrücknahmeautomaten sowie ein entsprechendes Verfahren zur Objekterkennung.

### TECHNISCHER HINTERGRUND

Obwohl die vorliegende Erfindung nachfolgend in Bezug auf Leergut und Leergutkisten näher erläutert wird, ist sie darauf nicht beschränkt sondern auch auf vielfältige andere Anwendungen eines Annahmeautomaten bzw. andere Arten von Objekten übertragbar.

Rücknahmeautomaten für Ein- oder Mehrwegpfandflaschen sowie die Flaschen aufnehmende Leergutkisten bzw. Gebinde, auch Leergut genannt, werden oftmals als Leergutautomaten bezeichnet. Sie sind vor allem in Ländern mit einem Einweg- und Mehrwegpflichtpfand für Getränkeverpackungen (z. B. Deutschland, Dänemark, Estland, Finnland, Kroatien, Norwegen, Schweden, Schweiz) sehr verbreitet. Zweck der Rücknahmeautomaten ist es, den Personalaufwand zur Leergutannahme zu reduzieren. Dies ist erstrebenswert, da die Leergutannahme für den Betreiber einen signifikanten Aufwand und damit Kosten, jedoch keinerlei Wertschöpfung mit sich bringt. Bei bekannten Rücknahmeautomaten ist jedoch immer ein gewisser Personalaufwand, vor allem für das Sortieren und/oder Umschlagen des Leerguts, erforderlich, da nicht oder fehlerhaft erkannte Leergutkisten und deren Inhalt im Zweifel einzeln in den Automaten eingegeben werden müssen. Diese müssen anschließend wieder aufwändig manuell einsortiert werden.

Um den passenden Pfandwert eines zurückgegebenen Leerguts in einem Leergutautomaten zu bestimmen, werden für gewöhnlich Erkennungssysteme verwendet, welche Größe, Form, Gewicht, und andere Eigenschaften eines Leerguts bestimmen. Dabei stellt insbesondere die fehlerfreie optische Erkennung eines Leergutkastens eine große Herausforderung dar, denn hier muss neben dem Kasten selbst auch Anzahl und Sorte der in dem Kasten aufgenommenen Gebinde fehlerfrei bestimmt werden, damit ein korrekter Pfandwert ausgegeben werden kann. Außerdem sollte das Erkennungssystem unzulässige Behälter, wie zum Beispiel Behälter ohne Pfandwert, verschmutzte oder eine Restflüssigkeit enthaltende Behälter, im Warensystem nicht geführte Kisten oder dergleichen ebenfalls möglichst fehlerfrei erkennen können, damit die Annahme verweigert werden kann.

Um diese Anforderungen zu erfüllen, werden in modernen Rücknahmeautomaten zurückgegebene Leergutkästen optisch oftmals mit mehreren Kameras dreidimensional vermessen. Um mit den Kameras qualitativ ausreichend gute Bilder des zurückgegebenen Leergutkastens zu erfassen, ist es üblich, die Kameras mit einer aktiven Beleuchtung und mit einem optischen System, welches Blenden, Umlenkspiegel und/oder optische Linsen, wie zu Beispiel Fresnel-Linsen, enthalten kann, bei dem Erfassen zu unterstützen.

Beispielsweise beschreibt die WO 02/058856 ein optisches System mit zwei Lichtquellen-Kamera-Paaren und einer großflächigen Fresnel-Linse, die zwischen einem Leergutkasten und den Lichtquellen-Kamera-Paaren angeordnet ist, um die Höhe eines in einem Leergutkasten befindlichen Gebindes zu vermessen. Zur Erkennung eines seitlich an dem Kasten befindlichen Logos wird oftmals ein großflächiger Umlenkspiegel verwendet.

Häufig werden Rücknahmeautomaten im Eingangsbereich oder in einem separierten Leergutannahmebereich von Verkaufshallen positioniert, wo sie kaum vom Personal beaufsichtigt sind. Ferner sind die Automaten Verunreinigungen ausgesetzt, die bei Eingabe des oftmals schmutzigen Leerguts auch in das Innere des Automaten eindringen und dabei die optischen Komponenten verunreinigen können. Auch können sich die Position und Ausrichtung der optischen Komponenten durch bei der Eingabe des Leerguts ergebenen Erschütterungen oder durch Temperaturschwankungen über die Zeit verändern, was die Qualität der erfassten Bilder beeinträchtigt. Zur dauerhaften Sicherstellung der Funktionsfähigkeit benötigen solche optische Systeme daher eine regelmäßige Wartung und Reinigung von fachkundigem Personal.

### ZUSAMMENFASSUNG DER ERFINDUNG

Vor diesem Hintergrund liegt der vorliegenden Erfindung die Aufgabe zugrunde, ein verbessertes Erkennungssystem bereitzustellen, welches mit einem vereinfachten Aufbau dennoch die Anforderungen an eine Objekterkennung erfüllt.

Erfindungsgemäß wird diese Aufgabe durch das Erkennungssystem zur Objekterkennung mit den Merkmalen des Patentanspruchs 1 und/oder durch ein Verfahren zur Objekterkennung mit den Merkmalen des Patentanspruches 13 gelöst.

Demgemäß ist vorgesehen:
- ein Erkennungssystem zur Objekterkennung für einen oder in einem Annahmeautomaten, insbesondere zur Erkennung von Leergutkästen und deren Belegung mit Leergutbehältern in einem Leergutrücknahmeautomaten, mit: einer Transporteinrichtung, welche eine vorbestimmte Transportrichtung aufweist; einer an der Transporteinrichtung angeordneten Erkennungseinrichtung, welche eine erste Kamera und eine zweite Kamera aufweist, wobei die zweite Kamera bezogen auf die Transportrichtung quer zu der ersten Kamera versetzt angeordnet ist, wobei die erste Kamera und die zweite Kamera jeweils zum Erfassen eines mit der Transporteinrichtung transportierten Objekts jeweils über einen direkten optischen Strahlengang angeordnet sind, und wobei die Erkennungseinrichtung mit einer Bildverarbeitungseinrichtung zur Ermittlung stereoskopischer Informationen des Objekts auf Basis der mittels der ersten Kamera und der zweiten Kamera erfassten Bildinformationen gekoppelt ist.
- Ein Verfahren zur Objekterkennung für einen oder in einem Annahmeautomaten, insbesondere eines Leergutkastens und deren Belegung in einem Leergutrücknahmeautomaten, bevorzugt mit einem erfindungsgemäßen Erkennungssystem, mit den Schritten: Transportieren eines Objekts mittels einer Transporteinrichtung in einer vorbestimmten Transportrichtung; Erfassen des mit der Transporteinrichtung transportierten Objekts mit einer an der Transporteinrichtung angeordneten Erkennungseinrichtung über einen direkten optischen Strahlengang, wobei die Erkennungseinrichtung eine erste Kamera und eine zweite Kamera aufweist, wobei die zweite Kamera bezogen auf die Transportrichtung quer zu der ersten Kamera versetzt angeordnet ist; Ermitteln von stereoskopischen Informationen des Objekts durch eine mit dem Erkennungssystem gekoppelte Bildverarbeitungseinrichtung auf Basis der mittels der ersten Kamera und der zweiten Kamera erfassten Bildinformationen.

Die der vorliegenden Erfindung zugrunde liegende Idee besteht darin, zwei Kameras zueinander im Bezug zu der Transportrichtung derart versetzt anzuordnen, dass das Objekt über einen direkten, das heißt ungestörten und ungebrochenen, optischen Strahlengang von den zwei Kameras erfassbar sind. Die Anordnung ist somit frei von zusätzlichen optischen Elementen, wie beispielsweise Spiegeln, Linsen, Blenden oder sonstige Licht ablenkende, streuende, beugende oder brechende Medien, ausgenommen der Luft, welche zwischen dem Objekt und den Kameras angeordnet sind. Der Strahlengang ist somit umlenkungs- und beugungsfrei.

Auf diese Weise wird in dem Erkennungssystem auf zusätzliche optische Komponenten komplett verzichtet, welche die Anfälligkeit für Verunreinigung oder fehlerhafte Justierung sowie den Bau- und Wartungsaufwand erhöhen. Ferner wird die Gefahr verringert, dass optische Verzerrungen zu fehlerhaft erfassten Bildinformationen führen. Mit einem erfindungsgemäß ungebrochenen, direkten Strahlengang werden daher die Fehlerquellen von minderwertigen oder unbrauchbaren Aufnahmen auf ein Minimum reduziert, was wiederrum Fehlermeldungen, falsche Erkennungen der Art des Leerguts sowie Ausfallzeiten vermeidet.

Die stereoskopischen Informationen werden erfindungsgemäß aus Bildinformationen ermittelt, welche von zwei in Bezug zu einer Transportrichtung des Objekts quer versetzt angeordneten Kameras erfasst werden. Auf diese Weise können durch Ausnutzung der Bewegung des Objekts auf der Transporteinrichtung unterschiedliche Perspektiven erfasst werden, was es ermöglicht, aus den erfassten Bildinformationen bzw. Daten zuverlässige stereoskopische Informationen abzuleiten.

Vorzugsweise sind die Kameras erfindungsgemäß derart ausgelegt, dass qualitativ ausreichende Bilder des Objekts auch ohne ein den Kameras zugeordnetes Beleuchtungsmittel erfasst werden können. Die Erkennungseinrichtung kann somit beleuchtungsfrei ausgebildet sein. Bei der Auslegung der Kamera ist demnach zum einen die Art und Größe, insbesondere die Lichtstärke und/oder die f-Zahl und/oder die Schärfentiefe, des Kameraobjektivs entsprechend den reduzierten Beleuchtungsgegebenheiten ausgelegt. So kann insbesondere ein Objektiv mit einer möglichst kleinen f-Zahl, beispielsweise kleiner als f/10, f/5, oder f/4, genutzt werden, damit noch genügend Licht für eine Ablichtung mit relativ kurzer Belichtungszeit, beispielsweise kleiner 50 ms, 10 ms oder 1 ms, von der Kamera eingefangen werden kann. Zum anderen ist ein rauscharmer Kamerasensor vorgesehen, welcher eine ausreichende Auflösung und Lichtempfindlichkeit bereitstellt, um in einer vorgegebenen beleuchtungsfreien Umgebung, typischerweise im Innern des Annahmeautomaten, qualitativ ausreichende Bilder zu erfassen. So werden bevorzugt Kamerasensoren mit geringem Dunkelrauschen und Ausleserauschen, beispielsweise kleiner als 10e-, verwendet, um auch bei Ablichtungen mit hohen ISO-Werten, beispielweise größer als 1000, noch qualitativ ausreichende Bildinformationen zu erhalten. Zur Reduzierung des Dunkelstroms, auf beispielsweise unter 1e-/s pixel, kann auch ein, beispielsweise auf unter 0°C, aktiv gekühlter Kamerasensor genutzt werden. Vorteilhaft ist es auf dieses Weise möglich, dass der Kamera kein Beleuchtungsmittel zugeordnet ist, so dass das erfindungsgemäße Erkennungssystem ohne ein Lichtquellen-Kamera-Paar auskommt. Auf diese Weise wird die Komplexität des Erkennungssystems reduziert sowie der Aufwand für die Wartung und Reinigung der Beleuchtungsmittel vermieden, so dass insgesamt ein zuverlässigeres und kostengünstigeres Erkennungssystem bereitgestellt wird.

Das erfindungsgemäße Erkennungssystem zur Objekterkennung kann beispielhaft in einem Leergutrücknahmeautomaten eingesetzt werden, in welchem zu erkennende Objekte beispielhaft Leergutkästen mit darin enthaltende Leergutbehälter bzw. Leergutflaschen sind. Jedoch ist die Erfindung nicht auf diese Anwendung beschränkt. Vielmehr kann das Erkennungssystem in jeglicher Art von Rückführungs- oder Annahmeautomaten verwendet werden, welche eine optische Erkennung des rückgeführten Objekts benötigen. Vorstellbar ist neben einem Rücknahmeautomaten für Mehrweggebinde beispielsweise auch ein Rücknahmeautomat für Postsendungen, in welchem äußere Abmessungen eines Pakets, ein Postlabel mit einer Nummer, einer Absenderadresse und/oder einem Poststempel auf dem Paket erkannt werden. Weiterhin wäre es denkbar, die Erfindung für andere zur Rücknahme bestimmte Gegenstände, beispielsweise Batterien, Mobiltelefone oder dergleichen, einzusetzen.

Als Transporteinrichtung können vielfältige Ausführungen vorgesehen sein, wobei eine Transportrichtung zumindest im Bereich der Erkennungseinrichtung vorbestimmt ist. Beispielsweise kann es sich um ein Transportband, einen Rollenförderer oder dergleichen handeln.
Die Bildverarbeitungseinrichtung ist mit der Erkennungseinrichtung verbunden und kann in das Erkennungssystem integriert oder physikalisch außerhalb des Erkennungssystems mit einer Datenverbindung verbunden ausgebildet sein. Beispielsweise kann es sich um einen internen Prozessor oder auch um eine Bildverarbeitung in einer Cloud handeln, wobei die stereoskopischen Informationen ermittelt werden.

Stereoskopie ist im Allgemeinen ist die Wiedergabe von Bildern mit einem räumlichen Eindruck von Tiefe. Beim Betrachten naher Gegenstände bietet die unterschiedliche Perspektive auf das selbe Objekt ein Mittel zur richtigen Schätzung der Entfernungen. Dies kann mit modernen Bildverarbeitungseinrichtungen in ähnlicher Weise wie vom menschlichen Gehirn beim binokularen Sehen umgesetzt werden. Die klassische Stereoskopie erfasst dazu die räumlichen Koordinaten (3D-Position) korrespondierender Punkte in einem Bildpaar. So dienen beispielsweise in der Fahrzeug- und Robotertechnik auf diesem Prinzip beruhende Stereovideosensoren zur Entfernungs- und Abstandsmessung. Stereoskopische Bildverarbeitungsmethoden sind dem Fachmann bekannt und werden an dieser Stelle nicht im Detail erläutert.

Insbesondere enthalten die ermittelten stereoskopischen Informationen daher dreidimensionale Formen und/oder Abmessungen des Objekts. Optional oder zusätzlich können auf dem Objekt aufgebrachte Zeichen, Barcodes, Beschriftungen und dergleichen erkannt werden.

Ferner ist ein Speicher mit einer Datenbank von Referenzdaten zu den zu erkennenden Objekten integriert und/oder angebunden. Mit diesen Referenzdaten werden die ermittelten stereoskopischen Informationen des erfassten Objekts abgeglichen, beispielsweise im Falle eines in einen Leergutautomaten eingegebenen Leergutkastens zur Entscheidung, ob der Leergutkasten angenommen wird und ggfs. zur Bestimmung eines Pfandwerts des Leergutkastens und dessen Belegung mit Leergutbehältern.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform sind die erste Kamera und die zweite Kamera zum Erfassen von Bildinformationen des Objekts ausschließlich mit an dem Objekt reflektiertem Umgebungslicht ausgelegt. Das Umgebungslicht kann dabei beispielsweise von Beleuchtungen von Verkaufshallen stammen, welches durch eine Einführungsöffnung des Annahmeautomaten und eventuellen weiteren Reflektionen im Inneren auf das Objekt trifft. Auf diese Weise kann auf jegliche Art von Beleuchtungsmitteln innerhalb des Annahmeautomaten verzichtet werden.

Gemäß einer Ausführungsform ist die zweite Kamera parallel zu der ersten Kamera ausgerichtet. Auf diese Weise wird eine besonders einfach zu justierende optische Anordnung bereitgestellt, welche auch besonders stabil befestigt werden kann. Auch können die Kameras so als einzelne Komponenten in einer vorgegebenen Halterung oder als gemeinsames Kameramodul bereitgestellt sein, was den Austausch erleichtert. Gemäß einer Ausführungsform bildet eine erste optische Achse der ersten Kamera zu einer zweiten optischen Achse der zweiten Kamera einen spitzen Winkel innerhalb einer quer zu der Beförderungsrichtung liegenden Ebene. Mit dieser Anordnung kann das Auflösungsvermögen, insbesondere in die Tiefe, verbessert werden, so dass Formen oder Maße des Objekts, wie zum Beispiel die Höhe eines in einer Leergutkiste aufgenommenen Behälters, genauer durch Stereoskopie ermittelt werden können. Dies erleichtert der die Bestimmung des entsprechenden Objekts bzw. eines entsprechenden Pfandwertes.

Gemäß einer Ausführungsform sind die erste Kamera und die zweite Kamera oberhalb der Transporteinrichtung, insbesondere in einem gleichen Abstand zu der Transporteinrichtung, angeordnet. Mit dieser Anordnung können genauere Bildinformationen für Aufrecht auf der Transporteinrichtung stehende Objekte, wie beispielsweise Getränkekästen und/oder in diesen aufgenommene Leergutbehälter, erfasst und daraus durch die Bildverarbeitungseinrichtung genauere stereoskopische Informationen bestimmt werden.

Gemäß einer Ausführungsform sind die erste Kamera und die zweite Kamera senkrecht zur Transportrichtung ausgerichtet. Alternativ wäre auch die senkrechte Ausrichtung von lediglich einer der Kameras denkbar. Im Gegensatz zu einer schrägen Anordnung in einem vorbestimmten Winkel ist die senkrechte Ausrichtung der Kameras einfacher zu messen und damit auch leichter zu integrieren bzw. zu montieren. Außerdem ermöglicht diese Ausrichtung eine optimale Erfassung von Bildinformationen über das Objekt.

Gemäß einer Ausführungsform sind die erste Kamera und die zweite Kamera ortsfest angeordnet. Die Kameras sind derart angeordnet und ausgerichtet, dass verschiedene Perspektiven des Objekts durch Serien bzw. Staffeln von Aufnahmen erfasst werden können. Auf diese Weise werden ansonsten oftmals zum Ablichten eines Objekts aus mehreren Perspektiven eingesetzte bewegliche Komponenten, wie beispielsweise Schienensysteme mit Kameraschlitten, vermieden. Dies reduziert vorteilhaft die Komplexität und damit den Wartungsaufwand des Erkennungssystems deutlich.

Gemäß einer Ausführungsform ist die Bildverarbeitungseinrichtung zur Ermittlung stereoskopischer Informationen des Objekts basierend auf einer einzelnen Ablichtung der ersten Kamera und einer einzelnen Ablichtung der zweiten Kamera ausgelegt. Somit wird eine Bearbeitungszeit der Bildinformationen auf ein Minimum reduziert, was die Datenmenge und somit auch die Anforderungen an die Bildverarbeitungseinrichtung deutlich reduziert. Vorteilhaft kann mit der geringen Datenmenge die Bildverarbeitung auch besonders einfach auf ein Drittsystem, beispielsweise einen Cloud-Server, verlagert werden.

Gemäß einer Ausführungsform ist die Bildverarbeitungseinrichtung alternativ oder zusätzlich zur Ermittlung stereoskopischer Informationen des Objekts basierend auf einer Staffel von Ablichtungen der ersten Kamera und einer Staffel von Ablichtungen der zweiten Kamera ausgelegt, wobei mit den jeweiligen Staffeln von Ablichtungen während des Transportierens des Objekts unterschiedliche Perspektiven des Objekts erfassbar sind. Unter einer Staffel ist insbesondere eine Serie von Aufnahmen in vorbestimmten Zeitabständen zu verstehen. Auf diese Weise können besonders detaillierte Bildinformationen erfasst werden, welche verbesserte stereoskopische Informationen des Objekts ermöglichen. Daraus kann die Bestimmung des Objekts, wie beispielsweise eines Leergutkastens und darin enthaltene Leergutbehälter, genauer und zuverlässiger erfolgen.

Gemäß einer Ausführungsform ist die Erkennungseinrichtung und/oder die Bildverarbeitungseinrichtung zur Erkennung von in einem Leergutkasten aufgenommenen Leergutbehältern ausgelegt. Insbesondere ist sie zur Erkennung eines Pfandwerts des Leergutkastens und der darin aufgenommenen Leergutbehälter ausgelegt. Damit kann die Erkennungseinrichtung für Rücknahmeautomaten in gängigen Lebensmittelgeschäften, im Getränkehandel und in Supermärkten eingesetzt werden.

Gemäß einer Ausführungsform sind die erste Kamera und die zweite Kamera zur Erfassung der Leergutbehälter innerhalb des Leergutkastens über einen direkten optischen Strahlengang, insbesondere von oberhalb des Leergutkastens, angeordnet. Damit wird ein optisch ungestörtes Erfassen der Leergutbehälter ermöglicht, wodurch Bildinformationen der Leergutbehälter zuverlässig bereitstellt werden.

Gemäß einer Weiterbildung ist die Bildverarbeitungseinrichtung zur Ermittlung stereoskopischer Informationen der Leergutbehälter ausgelegt. Mit den so erhalten dreidimensionalen Informationen der Leergutbehälter kann die Bestimmung der Art des Leergutbehälters weiter verbessert werden.

Gemäß einer Weiterbildung ist die Bildverarbeitungseinrichtung dazu ausgelegt, basierend auf den stereoskopischen Informationen eine Anzahl der in dem Leergutkasten aufgenommenen Leergutbehälter und/oder eine jeweilige Form, insbesondere eine Höhe, der Leergutbehälter und/oder die Art eines Flaschenverschlusses zu bestimmen. Mit dieser Auslegung können somit besonders umfassende Informationen über die im Objekt aufgenommenen Behälter ermittelt werden. Somit wird die Bestimmung der Art des Behälters insgesamt verbessert.

Gemäß einer besonders bevorzugten Ausführungsform ist die Bildverarbeitungseinrichtung zur Ermittlung stereoskopischer Informationen des Objekts basierend auf gleichzeitig erfassten Bildinformationen der ersten Kamera und der zweiten Kamera während des Transportierens des Objekts ausgelegt. Mit dieser Auslegung der Ermittlung des Objekts ist es vorteilhaft nicht mehr notwendig, das Objekt auf der Transporteinrichtung anzuhalten. Vielmehr kann das Objekt während des Transports mit der Transporteinrichtung erfasst werden. Das beschleunigt die Abfertigung bzw. erhöht den Durchsatz des Annahmeautomaten, wodurch Wartezeiten für die Bediener reduziert werden und damit das Benutzererlebnis verbessert wird. Ferner kann somit in großen Märkten, welche oftmals eine Mehrzahl von parallelen bzw. redundanten Annahmeautomaten vorhalten, ggfs. die Anzahl der Annahmeautomaten reduziert werden.

Gemäß einer Ausführungsform weist die Erkennungseinrichtung eine dritte Kamera zum Erfassen einer Seite des Objekts auf, welche schräg oder quer zu der ersten Kamera und der zweiten Kamera und/oder zur Transportrichtung (T) ausgerichtet ist. Mit der dritten Kamera können somit Bildinformationen erfasst werden, welche mit der ersten und zweiten Kamera nicht erfassbar sind. Das ermöglicht die sichere Unterscheidung von Objekten, welche sich lediglich durch ein von der Seite erkennbares Merkmal unterscheiden.

Gemäß einer Weiterbildung ist die dritte Kamera zum Erfassen eines an einer Seite des Objekts angeordneten Bildes, insbesondere eines Logos, einer Beschriftung und/oder eines Strichcodes, vorgesehen. Somit können auch Objekte, wie beispielsweise Leergutkästen, welche sich in der Form gleichen, und sich nur durch ein an der Seite angeordnetes Bild, wie beispielsweise ein Firmenname oder ein Firmenlogo, unterscheidet, zweifelsfrei bestimmt werden.

Gemäß einer Weiterbildung ist an einer der dritten Kamera gegenüberliegenden inneren Seitenwand des Annahmeautomaten eine Referenzfarbkarte von der dritten Kamera erfassbar angeordnet. Die Referenzfarbkarte ermöglicht einen Abgleich bzw. eine Eichung der Kamera auf die entsprechende Farbe, so dass auch unter sich verändernden Lichtverhältnissen Farben noch sicher bestimmt werden können. So können Bilder wie beispielsweise Firmenlogos, welche sich in ihrer Form aber nicht in ihrer Farbe ähneln, zweifelsfrei bestimmt werden können.

Gemäß einer Weiterbildung weist die Erkennungseinrichtung mindestens ein zur Seitenbeleuchtung vorgesehenes aktives Beleuchtungsmittel zur selektiven Beleuchtung mit einem vorbestimmten Wellenlängenbereich, insbesondere einer vorbestimmten Farbe, auf. Alternativ oder zusätzlich kann die dritte Kamera auch mindestens einen den vorbestimmten Wellenlängenbereichen des mindestens einen Beleuchtungsmittels entsprechenden Farbfilter beinhalten. Auf diese Weise kann ein auf der Seite angeordnetes Bild durch die dritte Kamera mit verbessertem Kontrast erfasst werden, was die Genauigkeit der erfassten Bildinformationen und die anschließende Bestimmung des Objekts verbessert.

Gemäß einer Ausführungsform ist mindestens eine dreidimensionale Form eines Objektabschnitts basierend auf den stereoskopischen Informationen durch die Bildverarbeitungseinrichtung bestimmbar. So kann ein beliebig ausgewählter aber charakteristischer Objektabschnitt zur Erkennung des Objekts herangezogen werden. Beispielsweise kann so eine Form eines Griffs eines Leergutkastens, welche oftmals charakteristisch für bestimmte Typen von Leergutkästen ist, erkannt werden. Damit wird die Zuverlässigkeit der Bestimmung weiter verbessert.

Gemäß einer Ausführungsform ist die Bildverarbeitungseinrichtung zur Erkennung unzulässiger Objekte basierend auf den stereoskopischen Informationen ausgelegt. Auf diese Weise wird die Annahme unzulässiger Objekte verhindert. Ferner wird vermieden, dass der Annahmeautomat durch Einführung unzulässiger Objekte fehlerhaft einen Pfandwert bestimmt. Auch verhindert dies einen möglicherweise durch unzulässige Objekte verursachten Ausfall des Annahmeautomaten.

Gemäß einer Ausführungsform umfasst das Verfahren zur Objekterkennung einen zusätzlichen Schritt des Klassierens des Objekts basierend auf den stereoskopischen Informationen mittels eines Abgleichs von in einem Speicher der Bildverarbeitungseinrichtung abgelegten Referenzdaten, wobei das Klassieren des Objekts insbesondere eine Prüfung auf Zulässigkeit des Objekts umfasst. Dieser zusätzliche Schritt des Verfahrens ermöglicht eine verbesserte Bestimmung des Objekts, womit eine erhöhte Zuverlässigkeit des Annahmeautomaten erreicht wird.

Gemäß einer Ausführungsform wird das Ermitteln stereoskopischer Informationen des Objekts basierend auf einer Staffel von Ablichtungen der ersten Kamera und einer Staffel von Ablichtungen der zweiten Kamera vorgenommen, wobei mit den Staffeln von Ablichtungen während des Transportierens des Objekts unterschiedliche Perspektiven des Objekts erfasst werden. Die Staffeln werden vorzugsweise synchron zueinander erfasst. Die Staffeln von Bildern ermöglichen ein Erfassen von detaillierteren Bildinformationen aus mehreren Perspektiven, aus welchen verbesserte stereoskopische Informationen des Objekts ermittelt werden können.

Die obigen Ausgestaltungen und Weiterbildungen lassen sich, sofern sinnvoll, beliebig miteinander kombinieren. Insbesondere sind sämtliche Merkmale des Erkennungssystems zur Objekterkennung auf das Verfahren zur Objekterkennung übertragbar. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: eine schematische Querschnittsansicht eines Ausführungsbeispiels eines Erkennungssystems zur Objekterkennung;
- Fig. 2: eine schematische Querschnittsansicht eines Ausführungsbeispiels eines Erkennungssystems zur Objekterkennung in einem Annahmeautomaten;
- Fig. 3: eine schematische Seitenansicht des Ausführungsbeispiels eines Erkennungssystems zur Objekterkennung in einem Annahmeautomaten aus Fig. 2;
- Fig. 4: eine schematische Querschnittsansicht eines weiteren Ausführungsbeispiels eines Erkennungssystems zur Objekterkennung für einen Annahmeautomaten;
- Fig. 5: eine schematische Querschnittsansicht eines weiteren Ausführungsbeispiels eines Erkennungssystems zur Objekterkennung für einen Annahmeautomaten;
- Fig. 6: eine schematische Seitenansicht des Ausführungsbeispiels eines Erkennungssystems zur Objekterkennung in einem Annahmeautomaten aus Fig. 5;
- Fig. 7: eine schematische Querschnittsansicht eines weiteren Ausführungsbeispiels eines Erkennungssystems zur Objekterkennung für einen Annahmeautomaten;
- Fig. 8: eine schematische Seitenansicht des Ausführungsbeispiels eines Erkennungssystems zur Objekterkennung in einem Annahmeautomaten aus Fig. 7; und
- Fig. 9: eine schematische Zeichnung eines Ausführungsbeispiels eines Verfahrens zur Objekterkennung.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleich wirkende Elemente, Merkmale und Komponenten - sofern nichts Anderes ausführt ist -jeweils mit denselben Bezugszeichen versehen.

### BESCHREIBUNG VON AUSFÜHRUNGSBEISPIELEN

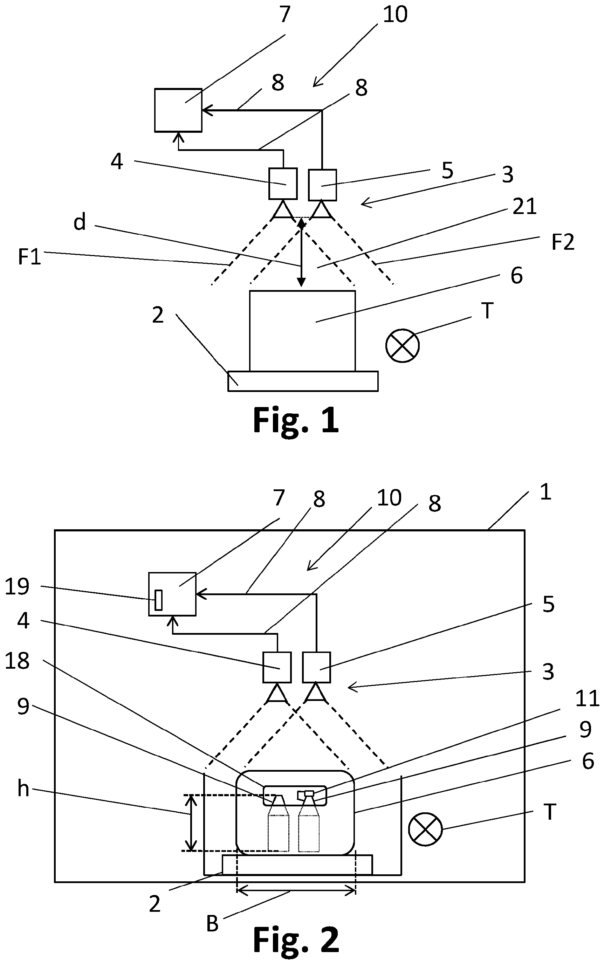

Fig. 1 zeigt eine schematische Querschnittsansicht eines Ausführungsbeispiels eines Erkennungssystems 10 zur Objekterkennung.

Das Erkennungssystem 10 umfasst eine Transporteinrichtung 2, welche eine vorbestimmte Transportrichtung T aufweist. Die Transporteinrichtung 2 ist hier beispielsweise als ein Förderband ausgebildet, welches in einem im unteren Bereich des Annahmeautomaten 1 angeordnet ist. Die Transportrichtung T weist in Fig. 1 dabei in die Zeichenebene hinein.

Das Erkennungssystem 10 umfasst außerdem eine an der Transporteinrichtung 2 angeordnete Erkennungseinrichtung 3, welche eine erste Kamera 4 und eine zweite Kamera 5 aufweist. Dabei ist die zweite Kamera 5 bezogen auf die Transportrichtung T quer zu der ersten Kamera 4 versetzt angeordnet.

Beispielsweise ist in Fig. 1 die zweite Kamera 5 parallel zu der ersten Kamera 4 ausgerichtet. Außerdem sind die erste Kamera 4 und die zweite Kamera 5 oberhalb der Transporteinrichtung T in einem gleichen Abstand d zu der Transporteinrichtung angeordnet. Die in Fig. 1 gezeigte Anordnung hat jedoch den Vorteil eines einfachen Montierens und Justierens der Kameras 4, 5. Bei weiteren Ausführungsformen sind aber auch andere Anordnungen denkbar.

Die erste Kamera 4 und die zweite Kamera 5 sind in dieser Ausführungsform senkrecht zur Transportrichtung T ausgerichtet. Es kann aber auch beispielsweise nur die erste Kamera 4 senkrecht zur Transportrichtung T ausgerichtet sein, während die zweite Kamera 5 in einem Winkel zur Transportrichtung T und zur ersten Kamera 4 angeordnet sein kann. Außerdem sind die erste Kamera 4 und die zweite Kamera 5 ortsfest angeordnet. Somit werden in dieser Ausführungsform auf bewegliche Systeme, wie beispielsweise Schienensysteme mit Schlitten, auf welchen die Kameras 4, 5 beweglich gelagert sind, verzichtet, was die Komplexität des Systems deutlich reduziert.

Wie in Fig. 1 dargestellt, sind die erste Kamera 4 und die zweite Kamera 5 jeweils zum Erfassen eines mit der Transporteinrichtung 2 transportierten Objekts 6 jeweils über einen direkten optischen Strahlengang angeordnet. Dazu fällt das Objekt 6 direkt in ein erstes Sichtfeld F1 der ersten Kamera 4 und in ein zweites Sichtfeld F2 der zweiten Kamera 5. Das Objekt befindet sich also in einem Erkennungsbereich 21, in dem es von den Kameras 4, 5 ohne weitere optische Elemente erfasst werden kann. Der optische Strahlengang zwischen dem Objekt 6 und der ersten und zweiten Kamera 4, 5 ist dabei entsprechend frei von zusätzlichen optischen Elementen, wie beispielsweise Spiegeln, Linsen, Blenden oder sonstigen Licht ablenkenden, streuenden, beugenden oder brechenden Medien, abgesehen von der Luft. Der Strahlengang ist auf diese Weise umlenkungs- und beugungsfrei.

Es ist dabei auch kein zu der ersten oder zweiten Kamera korrespondierendes Beleuchtungsmittel vorgesehen, was den Aufbau gegenüber bekannten Systemen vorteilhaft vereinfacht. Dazu sind die erste Kamera 4 und die zweite Kamera 5 zum Erfassen von Bildinformationen 8 des Objekts 6 ausschließlich mit an dem Objekt 6 reflektiertem Umgebungslicht ausgelegt.

Die Erkennungseinrichtung 10 ist dabei mit einer Bildverarbeitungseinrichtung 7 zur Ermittlung stereoskopischer Informationen des Objekts 6 auf Basis der mittels der ersten Kamera 4 und der zweiten Kamera 5 erfassten Bildinformationen 8 gekoppelt. Die Bildverarbeitungseinrichtung 7 ist dabei ausgelegt, basierend auf den stereoskopischen Informationen das Objekt 6 zu klassieren, und zu erkennen, ob es sich um ein zulässiges oder unzulässiges Objekt 6 handelt. Vorzugsweise ist die Bildverarbeitungseinrichtung 7 zur Ermittlung stereoskopischer Informationen des Objekts 6 basierend auf einer Staffel von Ablichtungen der ersten Kamera 4 und einer Staffel von Ablichtungen der zweiten Kamera 5 ausgelegt. Dabei werden die jeweiligen Staffeln von Ablichtungen während des Transportierens des Objekts 6 aus unterschiedlichen Perspektiven des Objekts 6 erfasst. Die Ermittlung stereoskopischer Informationen des Objekts 6 wird basierend auf gleichzeitig erfassten Bildinformationen der ersten Kamera 4 und der zweiten Kamera 5 während des Transportierens des Objekts 6vorgemommen. Durch entsprechende Auslegung der Hardware der Bildverarbeitungseinrichtung 7 ist es damit möglich, das Objekt 6 zu erkennen und anzunehmen, ohne dass die Transporteinrichtung 2 anhält. Somit kann einerseits eine ausreichend große Menge an Bildinformationen 8 bereitgestellt werden, woraus die spektroskopischen Informationen des Objekts 6 äußerst präzise ermittelt werden können, welche genaue Rückschlüsse auf dreidimensionale Formen und Abmessungen des Objekts erlauben. Andererseits ermöglicht dies einen höheren Durchsatz des Annahmeautomaten 2 und damit kürzere Wartezeiten für einen Benutzer.

Bei alternativen ausführungsformen kann die Bildverarbeitungseinrichtung 7 auch dazu ausgelegt sein, stereoskopische Informationen des Objekts 6 basierend auf einer einzelnen Ablichtung der ersten Kamera 4 und einer einzelnen Ablichtung der zweiten Kamera 5 zu ermitteln. Auch hier werden die Ablichtungen vorzugsweise gleichzeitig erfasst. So kann der Datenverarbeitungsaufwand minimiert werden, was die Anforderungen an die Hardware der Bildverarbeitungseinrichtung 7 reduziert. Allerdings sind die erhaltenen stereoskopischen Informationen dann auch weniger detailliert.

Fig. 2 zeigt eine schematische Querschnittsansicht eines Ausführungsbeispiels eines Erkennungssystems 10 zur Objekterkennung in einem Annahmeautomaten 1.

Das Erkennungssystem 10 ist hier beispielhaft zur Erkennung von Leergutkästen 6 und deren Belegung in einem Leergutrücknahmeautomaten 1 ausgebildet.

Die Erkennungseinrichtung 3, ist hier neben der Erkennung von Objekten 2 wie Leergutkästen 6 auch zur Erkennung von in einem Leergutkasten 6 aufgenommene Leergutbehältern 9 ausgelegt. Das Erkennungssystem ist somit für den Einsatz in einem Annahmeautomaten in Lebensmittelgeschäften, Getränkehändlern oder Supermärkten vorgesehen, wo für gewöhnlich Leergutkästen 6 mit einer Vielzahl darin aufgenommener Leergutbehälter 9 von einem Leergutrücknahmeautomaten 1 angenommen werden.

Um den richtigen Pfandwert des eingegebenen Leerguts zu bestimmen, wird neben der Erkennung des Leergutkastens 6 auch die richtige Erkennung aller Leergutbehälter 9 benötigt. Daher ist die Bildverarbeitungseinrichtung 7 auch zur Ermittlung stereoskopischer Informationen der in einem eingegebenen Leergutkasten aufgenommenen Leergutbehälter 9 ausgelegt. Insbesondere ist die Bestimmung von jedem einzelnen der Leergutbehälter 9 ermöglicht. Das bedeutet, dass die Bildverarbeitungseinrichtung 7 basierend auf den ermittelten stereoskopischen Informationen eine Anzahl der in dem Leergutkasten 6 aufgenommenen Leergutbehälter 9 zu bestimmt und eine jeweilige Form, insbesondere eine Höhe h, der Leergutbehälter 9 bestimmt. Außerdem kann die Bildverarbeitungseinrichtung 7 dazu ausgelegt sein, spezielle Merkmale der Leergutbehälter 9, wie beispielsweise die Art eines Flaschenverschlusses 11, zu bestimmen. Dies kann, wie in Fig. 2 gezeigt ist, auch die Unterscheidung von Leergutbehältern 9 mit und ohne Bügelverschluss 11 umfassen.

Zur Erfassung der Leergutbehälter 9 innerhalb des Leergutkastens 6 sind die erste Kamera 4 und die zweite Kamera 5 ebenfalls über einen direkten optischen Strahlengang von oberhalb des Leergutkastens 6 angeordnet. Diese Anordnung ermöglicht eine direkte Erfassung von Bildinformationen 8 der Leergutbehälter 6ohne zusätzliche optische Elemente. Damit kann vorzugsweise mit derselben Anordnung und Einstellung der Erkennungseinrichtung 3 sowohl der Leergutasten 6 als auch der Leergutbehälter 9 erfasst werden.

Gemäß Fig. 2 enthält die Bildverarbeitungseinrichtung 7 einen Speicher 19, auf welchem eine Datenbank mit Referenzdaten abgelegt ist. Bei einem Klassieren des Leergutkastens 6 und der Leergutbehälter 9 werden die ermittelten stereoskopischen Informationen mit den Referenzdaten abgeglichen. Bei erfolgreichem Abgleich werden basierend auf den Referenzdaten erkannte Leergutkästen 6 und Leergutbehälter 9 bekannten Typen zugeordnet und, sofern sie als zulässig klassiert sind, ein entsprechender Pfandwert gutgeschrieben.

Ein Leergutkasten 6 und/oder einem Leergutbehälter 9 kann auch als nicht zulässig klassiert werden, wenn beispielsweise der betreffende Händler das Leergut nicht führt und daher auch nicht zur Rücknahme akzeptiert. Andererseits kann ein Leergutkasten 6 und/oder Leergutbehälter 9 auch als unzulässig klassiert werden, wenn diese stark verschmutzt sind oder noch eine große Menge Restflüssigkeit enthalten.

Als zusätzliches Erkennungsmerkmal kann die Bildverarbeitungseinrichtung 7 eine dreidimensionale Form eines Objektabschnitts 6 basierend auf den stereoskopischen Informationen bestimmen. Der Objektabschnitt kann insbesondere eine Form eines Griffs 18 eines Leergutkastens 6 sein, der für gewisse Hersteller charakteristisch geformt ist und die fehlerfreie Erkennung sicherstellt. Beispielsweise ist es üblich, dass verschiedene Getränkehersteller sehr ähnlich aussehende Leergutkästen 6 verwenden, welche sich jedoch in Details der Objektabschnitte, wie beispielsweise der Form des Griffs 18, unterscheiden.

Das in Fig. 2 gezeigt Ausführungsbeispiel enthält kein Beleuchtungsmittel. Die erste Kamera 4 und die zweite Kamera 5 sind daher zum Erfassen von Bildinformationen des Objekts 6, in diesem Fall des Leergutkastens 6, ausschließlich mit an dem Objekt 6 reflektiertem Umgebungslicht ausgelegt. Dabei sind insbesondere die Lichtstärke des Objektivs der jeweiligen Kameras 4, 5 und der Lichtsensor der jeweiligen Kameras 4, 5 für einen starken Lichteinfang ausgelegt, so dass ein Erfassen von Bildinformationen 8 mit ausreichender Qualität nur mit Umgebungslicht möglich ist. Das Umgebungslicht kann dabei durch eine Öffnung 20 in den Annahmeautomaten 1 direkt oder über Reflektionen von einer äußeren Lichtquelle in den Annahmeautomaten eindringen, bevor es am Objekt 6, hier dem Leergutkasten 6, reflektiert und von den Kameras 4, 5 eingefangen und detektiert wird. Die Stärke des Umgebungslichts richtet sich dabei auch nach dem Aufstellungsort des Rücknahmeautomaten 1, welcher beispielsweise in einer Verkaufshalle mit künstlicher Beleuchtung sein kann. Selbstverständlich können die Kameras auch die Umgebungslichtbedingungen kalibriert werden.

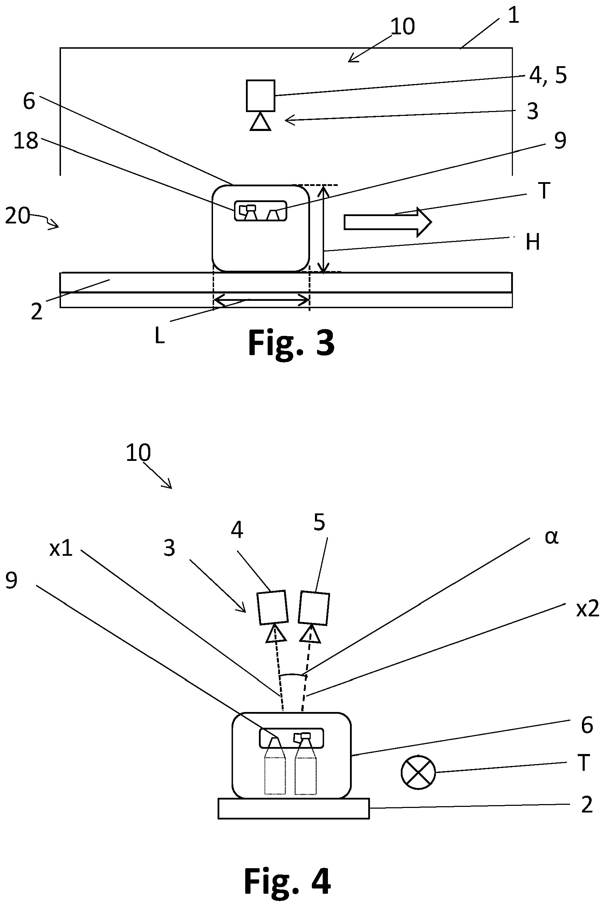

Fig. 3 ist eine schematische Seitenansicht des Ausführungsbeispiels eines Erkennungssystems 10 zur Objekterkennung in einem Annahmeautomaten 1 aus Fig. 2.

Bei dieser Seitenansicht ist zu erkennen, dass in dem Annahmeautomaten 1 der Leergutkasten 6 durch eine Öffnung 20, oder Einführungsöffnung, auf die Transporteinrichtung 2 aufgesetzt wird, welche den Leergutkasten 6 in der Transportrichtung T zu der Erkennungseinrichtung 3 transportiert. Bei der Erkennung des Leergutkastens werden insbesondere die Maße, also die Länge L, Breite B und Höhe H des Leergutkastens bestimmt. Außerdem werden die jeweiligen Höhen h der von dem Leergutkasten 6 aufgenommenen Leergutbehälter 9 bestimmt. Im Falle eines erkannten und zulässig klassierten Leergutkastens 6 wird der Leergutkasten 6 bevorzugt in Transportrichtung T weitertransportiert, worauf beispielsweise eine Sortieranlage, ein Zwischenpuffer oder eine Transportbahn zur weiteren Behandlung des Leerguts folgen kann.

Fig. 4 ist eine schematische Querschnittsansicht eines weiteren Ausführungsbeispiels eines Erkennungssystems 10 zur Objekterkennung für einen Annahmeautomaten 1.

Das in Fig. 4 gezeigte Ausführungsbeispiel unterscheidet sich von dem in Fig. 1 gezeigten Ausführungsbeispiel dadurch, dass die erste Kamera 4 und die zweite Kamera 5 derart zueinander ausgerichtet sind, dass eine erste optische Achse x1 der ersten Kamera 4 zu einer zweiten optischen Achse x2 der zweiten Kamera 5 einen spitzen Winkel α innerhalb einer quer zu der Beförderungsrichtung T liegenden Ebene bildet. Mit dieser Anordnung können zusätzliche Bildinformationen 8 von dem Objekt 6 erfasst werden, wodurch nach Bearbeitung der Bildinformationen eine höhere Auflösung in vertikaler Richtung erreicht werden kann. Somit kann das Erkennungssystem 10 beispielsweise kleinere Höhendifferenzen zwischen einzelnen Leergutbehältern 9 besser erkennen.

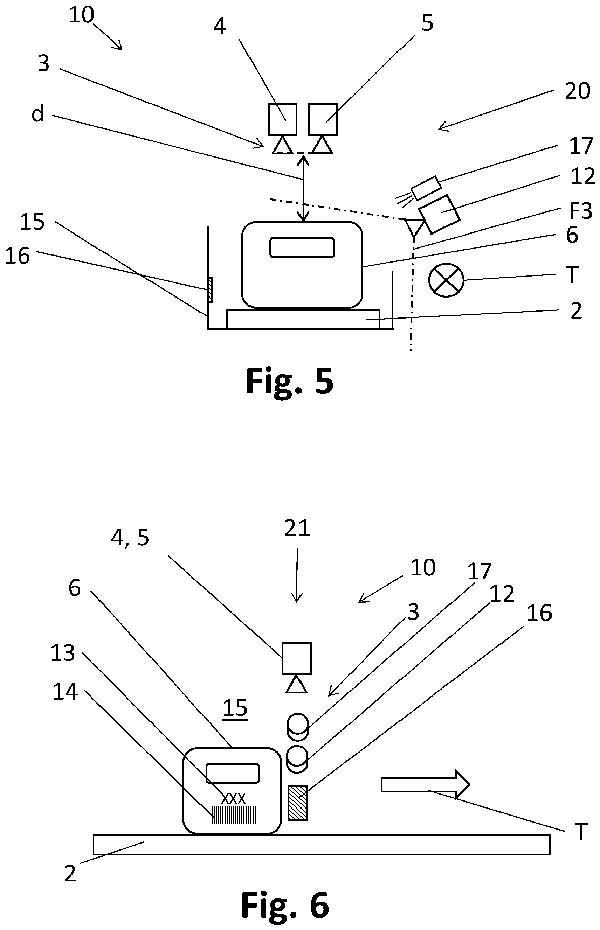

Fig. 5 zeigt eine schematische Querschnittsansicht eines weiteren Ausführungsbeispiels eines Erkennungssystems 10 zur Objekterkennung für einen Annahmeautomaten 1.

Das in Fig. 5 gezeigte Ausführungsbeispiel des Erkennungssystems 10 basiert ebenfalls auf dem in Fig. 1 gezeigten Ausführungsbeispiel, jedoch weist die Erkennungseinrichtung 3 hier eine zusätzliche dritte Kamera 12 zum Erfassen einer Seite des Objekts 6 auf. Dabei ist die dritte Kamera 12 schräg zu der ersten Kamera 4 und der zweiten Kamera 5 ausgerichtet. Die dritte Kamera 12 kann auch quer zu der ersten Kamera 4 oder der zweiten Kamera 5 ausgerichtet sein.

Außerdem weist die Erkennungseinrichtung 3 mindestens ein zur Seitenbeleuchtung vorgesehenes aktives Beleuchtungsmittel 17 zur selektiven Beleuchtung mit einem vorbestimmten Wellenlängenbereich, insbesondere einer vorbestimmten Farbe, auf. Das Beleuchtungsmittel 17 ist dabei vorzugsweise neben der dritten Kamera 12 angeordnet und in die gleiche Richtung wie die dritte Kamera 12 ausgerichtet. Andere Konfigurationen, welche die Sichtbarkeit von an der Seite des Objekts 6 abgebildeten Bildern erhöhen, sind ebenso denkbar. Die selektive Beleuchtung gemäß einem vorbestimmten Wellenlängenbereich wird dazu genutzt, den farblichen Kontrast von Bildern zu erhöhen, damit diese für die Erkennung qualitativ besser erfassbar sind. Die angewendeten Wellenlängenbereiche beinhalten insbesondere den sichtbaren Bereich, können aber auch Teile des ultravioletten und/oder infraroten Wellenlängenbereichs umfassen. Insbesondere kann das Beleuchtungsmittel 17 mit variabel gestalteten Farbfiltern benutzt werden, welche steuerbar wechselbar ausgebildet sind.

Um die Farbe auch unter wechselndem Umgebungslicht zweifelsfrei zu bestimmen, ist an einer der dritten Kamera 12 gegenüberliegenden, inneren Seitenwand 15 des Annahmeautomaten 1 eine Referenzfarbkarte 16 von der dritten Kamera 12 erfassbar angeordnet. Mit dieser Farbkarte kann die Bildverarbeitungseinrichtung 7 und/oder die dritte Kamera 12 kontrollieren, ob die Ermittlung der Farbe noch korrekt ist. Sofern eine über eine vorbestimmte Toleranz hinausgehende Abweichung erkannt wird, wird gegebenenfalls wird ein neuer Abgleich oder eine neue Kalibrierung der dritten Kamera oder ggfs. eine Kompensation der Abweichung durch die Bildverarbeitungseinrichtung vorgenommen. Auf diese Weise wird sichergestellt, dass sowohl einfarbige, als auch farblich unterschiedliche Bilder an der Seite des Objekts 6 korrekt erfasst und durch die Bildverarbeitungseinrichtung 7 bestimmt werden.

Fig. 6 zeigt eine schematische Seitenansicht des Ausführungsbeispiels eines Erkennungssystems 10 zur Objekterkennung für einen Annahmeautomaten 1 aus Fig. 5.

Die Erkennungseinrichtung 10 ist hier um einen Erkennungsbereich 21 angeordnet, durch welchen der Leergutkasten 6 in Transportrichtung T durchgeführt wird.

Wie in Bezug auf Fig. 1 erläutert, wird der Leergutkasten 6 dabei von oben durch die erste und die zweite Kamera 4, 5 erfasst. In Fig. 6 ist ferner zu erkennen, dass die dritte Kamera 12 zum Erfassen eines an einer Seite des Objekts 6 angeordneten Bildes 13, 14 vorgesehen ist, welche hier beispielhaft seitlich angeordnet und schräg zur horizontalen Ebene und zu der ersten Kamera 4 und der zweiten Kamera 5 ausgerichtet ist. Alternativ wäre auch eine horizontale Ausrichtung denkbar.

Das zu erkennende Bild an der Seite des Objekts 6, in diesem Fall des Leergutkastens 6, kann dabei ein Logo beispielsweise eines Getränkeherstellers sein. Ebenso kann der Leergutkasten 6 eine Beschriftung 13, beispielsweise einer Getränkemarke, oder eine Typkennzeichnung, beispielsweise eines Pfandsystems, enthalten. Ferner kann es sich um ein Bild/Symbol, ein Wort und/oder einen Bar- oder Strichcode 14 handeln. Die erfassten Logos, Beschriftungen 13 und Strichcodes und dergleichen an der Seite des Leergutkastens 6 helfen dabei, den Typ des Leergutkastens 6 zweifelsfrei zu identifizieren.

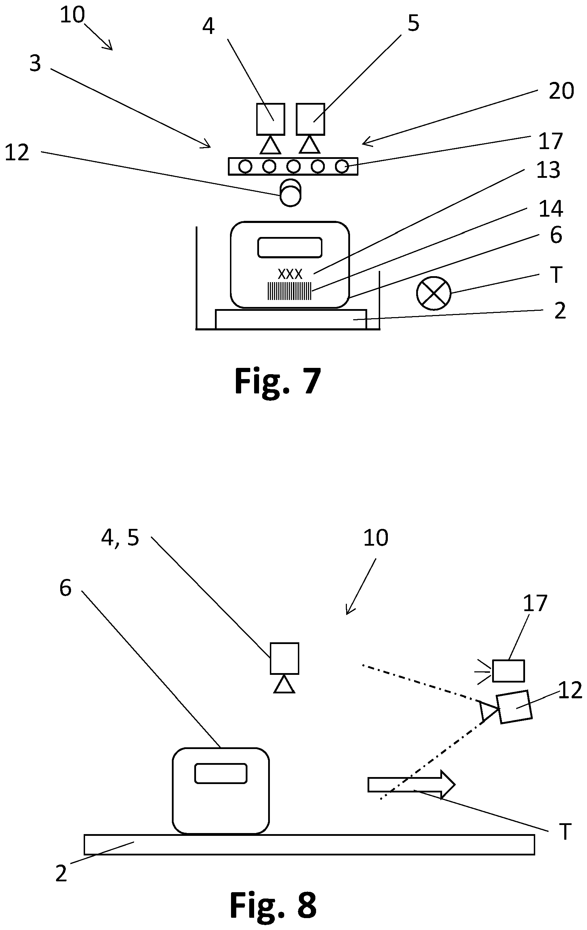

Fig. 7 ist eine schematische Querschnittsansicht eines weiteren Ausführungsbeispiels eines Erkennungssystems zur Objekterkennung für einen Annahmeautomaten.

In diesem Ausführungsbeispiel ist die dritte Kamera 12 schräg zu der Transportrichtung T ausgerichtet, so dass Bilder 13, 14, insbesondere Logos, Beschriftungen 13 und/oder Bar- oder Strichcodes 14, an der in Bezug auf die Transportrichtung T Vorderseite, alternativ auch an der Rückseite, eines Leergutkastens 6 erfasst werden können. Ein Beleuchtungsmittel 17 ist oberhalb der dritten Kamera 12 angeordnet. Das Beleuchtungsmittel 17 ist hierbei als Leiste mit einer Vielzahl, hier als Beispiel mit fünf, Lichtquellen, beispielsweise RGB-LEDs, ausgebildet. So kann das Objekt, falls notwendig auch farblich selektiv, ausreichend ausgeleuchtet werden.

Fig. 8 ist eine schematische Seitenansicht des Ausführungsbeispiels eines Erkennungssystems zur Objekterkennung in einem Annahmeautomaten aus Fig. 7.

Zu erkennen ist hierbei, dass die dritte Kamera 12 an Ende der Transporteinrichtung 2 in Transportrichtung T angeordnet und entgegen der Transportrichtung T ausgerichtet ist. Damit fallen die Bilder 13, 14 an der in Bezug auf die Transportrichtung T Vorderseite des Leergutkastens 6 in das Sichtfeld F3 der leicht schräg nach unten ausgerichteten dritten Kamera 12 und können von der dritten Kamera 12 abgelichtet werden.

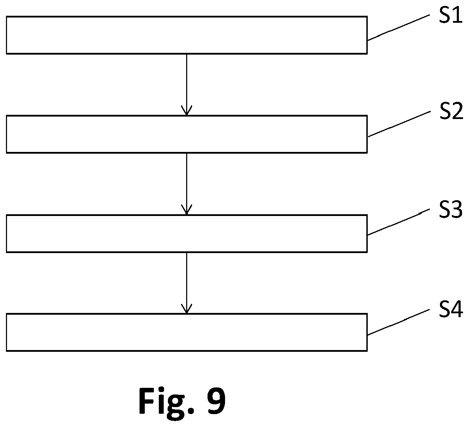

Fig. 9 zeigt eine schematische Zeichnung eines Ausführungsbeispiels eines Verfahrens zur Objekterkennung.

Dabei kann es sich insbesondere um ein Verfahren zur Erkennung eines Leergutkastens 6 und dessen Belegung in einem Leergutrücknahmeautomaten 1 handeln.. Das Verfahren umfasst dabei einen Schritt des Transportierens S1 eines Objekts 6 mittels einer Transporteinrichtung 5 in einer vorbestimmten Transportrichtung T. Ist das Objekt 6 in einem Bereich, d.h. einem Erkennungsbereich 21, angekommen, in welchem das Objekt 6 von einer Erkennungseinrichtung 3 erfasst werden kann, erfolgt der weitere Schritt des Erfassens S2 des mit der Transporteinrichtung 5 transportierten Objekts 6 mit der an der Transporteinrichtung 5 angeordneten Erkennungseinrichtung 3 über einen direkten optischen Strahlengang. Dazu weist die Erkennungseinrichtung 3 eine erste Kamera 4 und eine zweite Kamera 5 auf, wobei die zweite Kamera 5 bezogen auf die Transportrichtung T quer zu der ersten Kamera 4 versetzt angeordnet ist. Anschließend erfolgt der Schritt des Ermittelns S3 von stereoskopischen Informationen des Objekts 6 durch eine mit dem Erkennungssystem 3 gekoppelte Bildverarbeitungseinrichtung 7 auf Basis der mittels der ersten Kamera 4 und der zweiten Kamera 5 erfassten Bildinformationen.

Das Ermitteln stereoskopischer Informationen des Objekts 6 kann dabei basierend auf einer einzelnen oder einer Staffel von Ablichtungen der ersten Kamera 4 und einer einzelnen oder einer Staffel von Ablichtungen der zweiten Kamera 5 vorgenommen werden. Um die Informationsmenge zu maximieren, werden vorzugsweise mit den Staffeln von Ablichtungen während des Transportierens des Objekts 6 unterschiedliche Perspektiven des Objekts 6 erfasst. Bevorzugt ist damit das gleichzeitige Erfassen des Objekts 6 durch die beiden Kameras 4, 5 während des Transportierens vorgesehen.

Ist dieser Schritt abgeschlossen, erfolgt der optionale Schritt des Klassierens S4, in welchem das Objekt 6 basierend auf den stereoskopischen Informationen mittels eines Abgleichs von in einem Speicher 19 der Bildverarbeitungseinrichtung 7 abgelegten Referenzdaten klassiert wird. Dabei kann das Klassieren des Objekts 6 eine Prüfung auf Zulässigkeit des Objekts 6 umfassen.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Insbesondere sind, wie bereits angemerkt, die Ausführungsbeispiele der Fig. 2 bis 6 nicht auf Rücknahmeautomaten 1 von Leergutkästen 6 mit aufgenommenen Leergutbehältern 9 beschränkt. Insbesondere kann mit solch einem Erkennungssystem auch Post-/oder Paketsendungen erkannt werden. Ebenso ist die Anzahl der Kameras 4, 5 zur Ermittlung von stereoskopischen Informationen nicht auf "genau" zwei Kameras beschränkt. Insbesondere können auch mehr als zwei Kameras dafür verwendet werden.

### Bezugszeichenliste

- 1: Annahmeautomat / Leergut-Rücknahmeautomat
- 2: Transporteinrichtung
- 3: Erkennungseinrichtung
- 4: erste Kamera
- 5: zweite Kamera
- 6: Objekt / Leergutkasten
- 7: Bildverarbeitungseinrichtung
- 8: Bildinformationen
- 9: Leergutbehälter
- 10: Erkennungssystem
- 11: Flaschenverschluss
- 12: dritte Kamera
- 13: Beschriftung
- 14: Strichcode
- 15: innere Seitenwand
- 16: Referenzfarbkarte
- 17: Beleuchtungsmittel
- 18: Griff
- 19: Speicher
- 20: Öffnung
- 21: Erkennungsbereich
- B: Breite des Objekts
- F1: Sichtfeld der ersten Kamera
- F2: Sichtfeld der zweiten Kamera
- F3: Sichtfeld der dritten Kamera
- H: Höhe des Objekts
- h: Höhe des Leergutbehälters
- L: Länge des Objekts
- T: Transportrichtung
- S1-S4: Verfahrensschritte

## Patentansprüche

1. Erkennungssystem (10) zur Objekterkennung für einen oder in einem Annahmeautomaten (1), insbesondere zur Erkennung von Leergutkästen und deren Belegung mit Leergutbehältern (9) in einem Leergutrücknahmeautomaten, mit:
einer Transporteinrichtung (2), welche eine vorbestimmte Transportrichtung (T) aufweist;
einer an der Transporteinrichtung (2) angeordneten Erkennungseinrichtung (3), welche eine erste Kamera (4) und eine zweite Kamera (5) aufweist, wobei die zweite Kamera (5) bezogen auf die Transportrichtung (T) quer zu der ersten Kamera (4) versetzt angeordnet ist,
wobei die erste Kamera (4) und die zweite Kamera (5) jeweils zum Erfassen eines mit der Transporteinrichtung (5) transportierten Objekts (6) jeweils über einen direkten optischen Strahlengang angeordnet sind, und
wobei die Erkennungseinrichtung (3) mit einer Bildverarbeitungseinrichtung (7) zur Ermittlung stereoskopischer Informationen des Objekts (6) auf Basis der mittels der ersten Kamera (4) und der zweiten Kamera (5) erfassten Bildinformationen (8) gekoppelt ist.

2. Erkennungssystem (10) nach Anspruch 1,
**dadurch gekennzeichnet,**
**dass** die erste Kamera (4) und die zweite Kamera (5) zum Erfassen von Bildinformationen des Objekts (6) ausschließlich mit an dem Objekt (6) reflektiertem Umgebungslicht ausgelegt sind.

3. Erkennungssystem (10) nach Anspruch 1 oder 2,
**dadurch gekennzeichnet,**
**dass** die zweite Kamera (5) parallel zu der ersten Kamera (4) ausgerichtet ist.

4. Erkennungssystem (10) nach Anspruch 1 oder 2,
**dadurch gekennzeichnet,**
**dass** eine erste optische Achse (x1) der ersten Kamera (4) zu einer zweiten optischen Achse (x2) der zweiten Kamera (5) einen spitzen Winkel (α) innerhalb einer quer zu der Beförderungsrichtung (T) liegenden Ebene bildet.

5. Erkennungssystem (10) nach einem der vorstehenden Ansprüche,
**dadurch gekennzeichnet,**
**dass** die erste Kamera (4) und die zweite Kamera (5) oberhalb der Transporteinrichtung (5), insbesondere in einem gleichen Abstand (d) zu der Transporteinrichtung (5), angeordnet sind.

6. Erkennungssystem (10) nach einem der vorstehenden Ansprüche,
**dadurch gekennzeichnet,**
**dass** die erste Kamera (4) und/oder die zweite Kamera (5) senkrecht zur Transportrichtung (T) ausgerichtet sind.

7. Erkennungssystem (10) nach einem der vorstehenden Ansprüche,
**dadurch gekennzeichnet,**
**dass** die Bildverarbeitungseinrichtung (7) zur Ermittlung stereoskopischer Informationen des Objekts (6) basierend auf einer einzelnen Ablichtung der ersten Kamera (4) und einer einzelnen Ablichtung der zweiten Kamera (5) ausgelegt ist, und/oder dass die Bildverarbeitungseinrichtung (7) zur Ermittlung stereoskopischer Informationen des Objekts (6) basierend auf einer Staffel von Ablichtungen der ersten Kamera (4) und einer Staffel von Ablichtungen der zweiten Kamera (5) ausgelegt ist, wobei mit den jeweiligen Staffeln von Ablichtungen während des Transportierens des Objekts (6) unterschiedliche Perspektiven des Objekts (6) erfassbar sind.

8. Erkennungssystem (10) nach einem der vorstehenden Ansprüche,
**dadurch gekennzeichnet,**
**dass** die Erkennungseinrichtung (3) und/oder die Bildverarbeitungseinrichtung (7) zur Erkennung von in einem Leergutkasten aufgenommenen Leergutbehältern (9) ausgelegt ist, wobei die erste Kamera (4) und die zweite Kamera (5) zum Erfassen der Leergutbehälter (9) innerhalb des Leergutkastens (6) über einen direkten optischen Strahlengang, insbesondere von oberhalb des Leergutkastens (6), angeordnet sind, wobei die Bildverarbeitungseinrichtung (7) insbesondere dazu ausgelegt ist, basierend auf den stereoskopischen Informationen eine Anzahl der in dem Leergutkasten (6) aufgenommenen Leergutbehälter (9) und/oder eine jeweilige Form, insbesondere eine Höhe, der Leergutbehälter (9) und/oder die Art eines jeweiligen Flaschenverschlusses (11) zu bestimmen.

9. Erkennungssystem (10) nach einem der vorstehenden Ansprüche,
**dadurch gekennzeichnet,**
**dass** die Bildverarbeitungseinrichtung (7) zur Ermittlung stereoskopischer Informationen des Objekts (6) basierend auf gleichzeitig erfassten Bildinformationen der ersten Kamera (4) und der zweiten Kamera (5) während des Transportierens des Objekts (6) ausgelegt ist.

10. Erkennungssystem (10) nach einem der vorstehenden Ansprüche,
**dadurch gekennzeichnet,**
**dass** die Erkennungseinrichtung (3) eine dritte Kamera (12) zum Erfassen einer Seite des Objekts (6) aufweist, welche schräg oder quer zu der ersten Kamera (4) und der zweiten Kamera (5) und/oder zu der Transportrichtung (T) ausgerichtet ist, wobei die dritte Kamera (12) insbesondere zum Erfassen eines an einer Seite des Objekts (6) angeordneten Bildes (13, 14), insbesondere eines Logos, einer Beschriftung (13) und/oder eines Strichcodes (14), vorgesehen ist.

11. Erkennungssystem (10) nach Anspruch 10,
**dadurch gekennzeichnet,**
**dass** die Erkennungseinrichtung (3) mindestens ein zur Seitenbeleuchtung vorgesehenes aktives Beleuchtungsmittel (17) zur selektiven Beleuchtung mit einem vorbestimmten Wellenlängenbereich, insbesondere einer vorbestimmten Farbe, aufweist und/oder dass an einer der dritten Kamera (12) gegenüberliegenden inneren Seitenwand (15) des Annahmeautomaten (1) eine Referenzfarbkarte (16) von der dritten Kamera (12) erfassbar angeordnet ist.

12. Erkennungssystem (10) nach einem der vorstehenden Ansprüche,
**dadurch gekennzeichnet,**
**dass** mindestens eine dreidimensionale Form eines Objektabschnitts (6), insbesondere eine Form eines Griffs (18) eines Leergutkastens (6), basierend auf den stereoskopischen Informationen durch die Bildverarbeitungseinrichtung (7) bestimmbar ist.

13. Verfahren zur Objekterkennung für einen oder in einem Annahmeautomaten (1), insbesondere eines Leergutkastens und dessen Belegung in einem Leergutrücknahmeautomaten, mit den Schritten:
Transportieren (S1) eines Objekts (6) mittels einer Transporteinrichtung (5) in einer vorbestimmten Transportrichtung (T) ;
Erfassen (S2) des mit der Transporteinrichtung (5) transportierten Objekts (6) mit einer an der Transporteinrichtung (5) angeordneten Erkennungseinrichtung (3) über einen direkten optischen Strahlengang, wobei die Erkennungseinrichtung (3) eine erste Kamera (4) und eine zweite Kamera (5) aufweist, wobei die zweite Kamera (5) bezogen auf die Transportrichtung (T) quer zu der ersten Kamera (4) versetzt angeordnet ist;
Ermitteln (S3) von stereoskopischen Informationen des Objekts (6) durch eine mit dem Erkennungssystem (3) gekoppelte Bildverarbeitungseinrichtung (7) auf Basis der mittels der ersten Kamera (4) und der zweiten Kamera (5) erfassten Bildinformationen.

14. Verfahren zur Objekterkennung nach Anspruch 13,
**dadurch gekennzeichnet,**
**dass** ein zusätzlicher Schritt des Klassierens (S4) des Objekts (6) basierend auf den stereoskopischen Informationen mittels eines Abgleichs von in einem Speicher (19) der Bildverarbeitungseinrichtung (7) abgelegten Referenzdaten vorgesehen ist, wobei das Klassieren des Objekts (6) insbesondere eine Prüfung auf Zulässigkeit des Objekts (6) umfasst.

15. Verfahren zur Objekterkennung nach Anspruch 13 oder 14,
**dadurch gekennzeichnet,**
**dass** das Ermitteln stereoskopischer Informationen des Objekts (6) basierend auf einer Staffel von Ablichtungen der ersten Kamera (4) und einer Staffel von Ablichtungen der zweiten Kamera (5) vorgenommen wird, wobei mit den Staffeln von Ablichtungen während des Transportierens des Objekts (6) unterschiedliche Perspektiven des Objekts (6) erfasst werden.
